# EUROPEAN PATENT APPLICATION

(11) **EP 3 754 224 A1**
(43) Date of publication of application: **23.12.2020**
(21) Application number: 20180396.2
(22) Date of filing: 16.06.2020
(51) Int. Cl.: F16G 13/04

(54) **IMPROVEMENT OF PLASTIC MELTING ROBUSTNESS FOR SILENT CHAIN**

(30) Priority: 21.06.2019 US 201916448615
(71) Applicant: Borgwarner Inc., Auburn Hills, Michigan 48326 (US)
(72) Inventor: MORIKAWA, Isao, Nabari City, Mie (JP)
(74) Representative: Peterreins Schley

(57) **Abstract**

A chain (100) containing links (101) in which at least some of the inner links have links multi-radiused backs which include a small center radius with adjacent larger radiused backs on either side of the center radius. The center radius is present along the back of the link opposite the crotch (123) of the link.

## Description

### BACKGROUND OF THE INVENTION

### FIELD OF THE INVENTION

The invention pertains to the field of silent chains. More particularly, the invention pertains to improvement of plastic melting robustness for silent chains.

### DESCRIPTION OF RELATED ART

Chains interact with arms and guide which are typically made of plastic. The chain tension, the touch area between the arm or guide and the chain, and friction between the chain and the arm or guide impacts the melting of the of the plastic of the arm or guide which can ruin the arm or guide.

Although slight increases in contact pressure can be a benefit for friction between the chain and the plastic guide faces, one of the issues in doing so is that at a certain tension you can overcome the ability of the plastic arm or guide to dissipate heat, especially if the radius chosen for the back is too small, which results in significant melting and warping of the plastic arm or guide.

### SUMMARY OF THE INVENTION

In an embodiment of the present invention, a chain contains links in which at least some of the inner links have links backs which include a small center radius with adjacent larger radiused backs on either side of the center radius. The center radius is present along the back of the link opposite the crotch of the link. In some embodiments, the small center radius of the back of the link is adjacent on either side to a straight portion tangent to the small center radius. By having inner links with a multi-radiused back, only the small center radius of the back of the link is in direct contact with the plastic arm or guide during low chain tension, decreasing the surface area of the chain in contact with the plastic arm or guide and improving friction between the chain and the plastic arm or guide. When the tension in the chain increases, penetration of the link back into the plastic arm or guide increases commensurately. During increased tensions, the larger radii of the back, adjacent the small center radius distribute the load across a larger area of the back of the link, reducing pressure that the pressure times volume (PV) limit of the plastic won't be exceeded.

In one embodiment, a small radius in the link back center transitions to two larger radii portions. In another embodiment, a small radius in the link back center transitions to two tangent lines. The selection of the small center radius depends on the total width of contact across the link row and typical minimum operating tension. The selection of the transition geometry (large radii or tangent) is based on the maximum anticipated operating tension or the fatigue limit of the chain.

### BRIEF DESCRIPTION OF THE DRAWING

Fig. 1 shows a top down view of a chain interfacing with an arm or guide.
Fig. 2 shows a sectional view along line C-C of Fig. 1.
Fig. 3 shows a sectional view along line D-D of Fig. 1.
Fig. 4a shows a link of the chain of a first embodiment of the present invention.
Fig. 4b shows a close-up of different radius of the back of the link.
Fig. 5a shows the link of Fig. 4 interacting with an arm or guide during high chain tension.
Fig. 5b shows a conventional link with a single radiused back interacting with an arm or guide during high chain tension.
Fig. 6 shows a graph of tension vs surface pressure of a different radiused back chain links.
Fig. 7 shows a graph of average loss of torque versus speed of different chains.
Fig. 8 shows a side view of chain of Fig. 1.

### DETAILED DESCRIPTION OF THE INVENTION

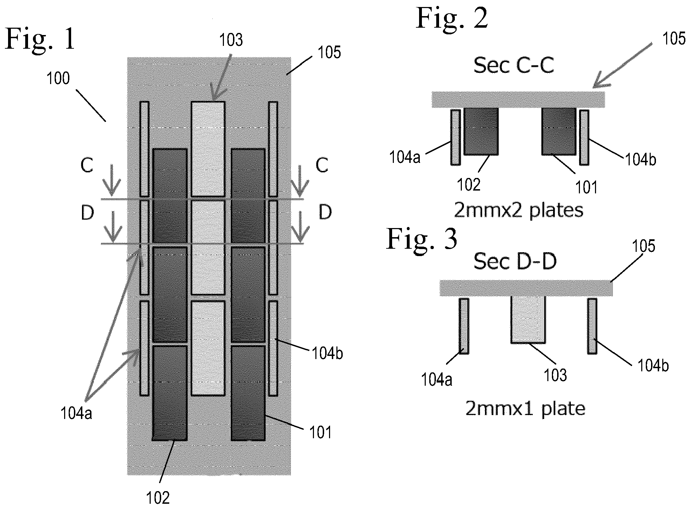

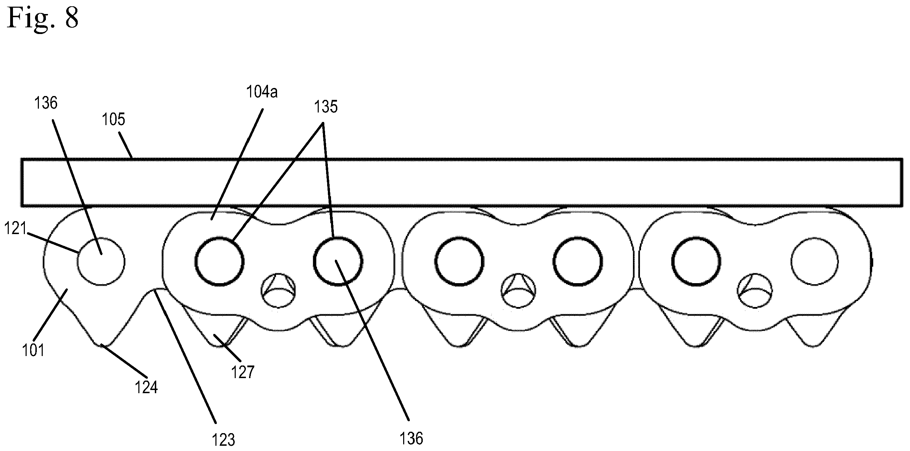

Figures 1-4b and 8 show a chain and the associated inner links with the multi-radiused back interfacing with a plastic arm or guide 105. The chain 100 includes a plurality of interlaced or interleaved inner links 101 in a guide row 103 and a non-guide row 102 surrounded by guide links 104a, 104b. The inner guide links 101 in the non-guide row 102 are adjacent the outer links or guide links 104a, 104b on either side of the chain. While not shown, the lacing of the chain 100 is maintained through connecting elements 136 such as pins, which are received within apertures 121 of the inner links 101 and apertures 135 of guide links 104a, 104b. The connecting elements 136 are preferably fixedly mounted to the guide links 104a, 104b. The connecting elements 136 passes through, in a chain width direction, a first guide link 104a, an inner link 101 in the non-guide row 102, an inner link 101 in the guide row 103, an inner link 101 in the non-guide row 103 and a second guide link 104b. While chain 100 is shown as having a 3x2 lacing (3 sets of inner links in a guide row and two sets of inner links in a non-guide row), other lacings may be used.

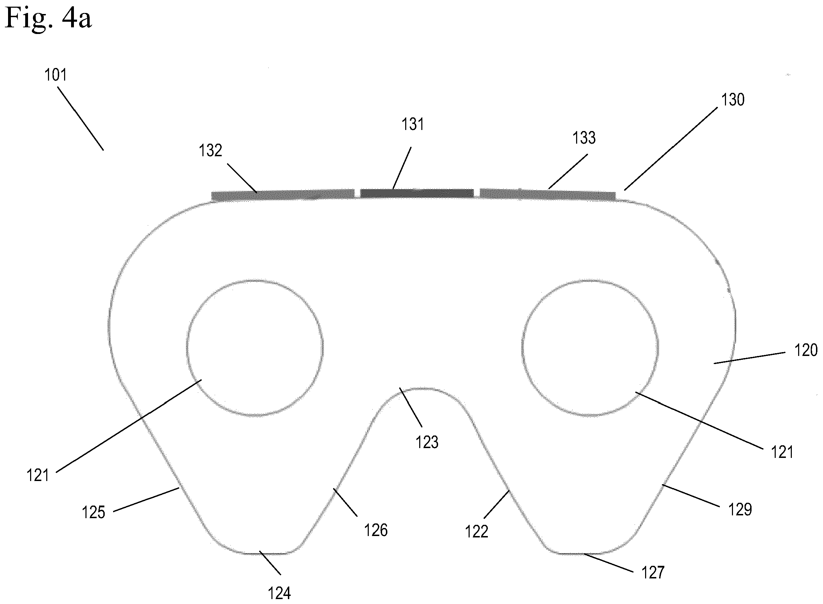

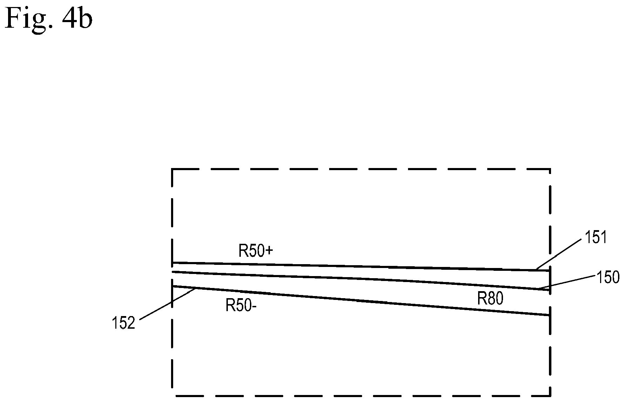

The inner links 101 have a link body 120 defining two apertures 121, a first tooth 124 and a second tooth 127. The first tooth 124 and the second tooth 127 are separated by a crotch 123. The first tooth 124 has an outer flank 125 and an inner flank 126. The second tooth 127 has an outer flank 129 and an inner flank 122. Opposite the first tooth 124, the second tooth 127 and crotch 123 of the link 101 is the multi-radiused link back 130. The multi-radiused link back 130 includes a small center radiused back 131 which transitions to two larger radii portions or to two tangent lines 132, 133 on either side of the back 131. The small center radiused back 131 is preferably opposite the crotch 123 of the link 101 and the two larger radii portions or tangent lines 132, 133 are preferably aligned with the teeth 124, 127 and/or the apertures 121 of the inner link 101. The small centered radiused back 131 preferably has a radius of 80mm or less. The two large radii portions 132, 133 preferably have a radius of 50 mm or larger. A comparison of the different radii portion is shown in Figure 4b.

Referring to Figure 4b, three different radii segments which can be used for the multi-radiused link back 130 are shown. Segment 150 has a radii of R80mm. Segment 151 has a radii of R50+ mm and segment 152 has a radius of -R50mm. In one embodiment, the small center radiused back 131 of R80 mm and the two larger radii portions 132, 133 are R50+mm.

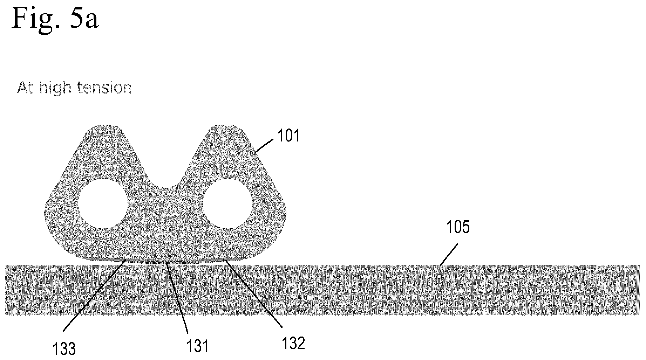

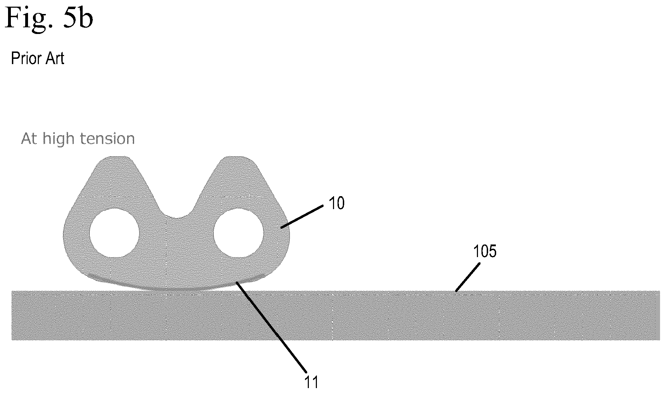

Figure 5a shows a multi-radiused link 101 of an embodiment of the present invention in interacting with the plastic arm or guide 105 and Figure 5b shows a conventional single radiused back link 10 interacting with the plastic arm or guide 105. Conventionally, links 10 that have a smaller back radius 11 reduce friction at low tensions, but at high tensions and/or speeds, the pressure exerted by the smaller back radius 11 of the link 10 onto the plastic arm or guide 105 increases, increasing the melting of the plastic arm or guide that occurs. Links that have a large back radius have worse friction losses due to the increased surface area contact between the link back and the plastic arm or guide. However, the links with a large back radius improve the plastic melting that occurs.

During lower than average tension of the chain, only the small centered radius 131 of the multi-radiused link back 130 of the link 101 contacts the plastic arm or guide 105, which reduces friction losses between the multi-radiused back link 130 and the plastic arm or guide 105. In comparison, a significantly larger portion of the back of the single back radius 11 is contact with the plastic arm or guide 105. During high tension of the chain, the large radii portions or tangent lines 132, 133 of the multi-radiused back link 130 contacts the plastic arm or guide 105, increasing the surface area in contact with the plastic arm or guide 105, decreasing or dissipating the friction and associated heat to decrease the damage to the plastic arm or guide 105. In contrast, during high tension of the chain, a small portion of the single radii 11 back link contacts the plastic arm or guide 105 which results in high friction between the link 10 and the plastic arm or guide 105.

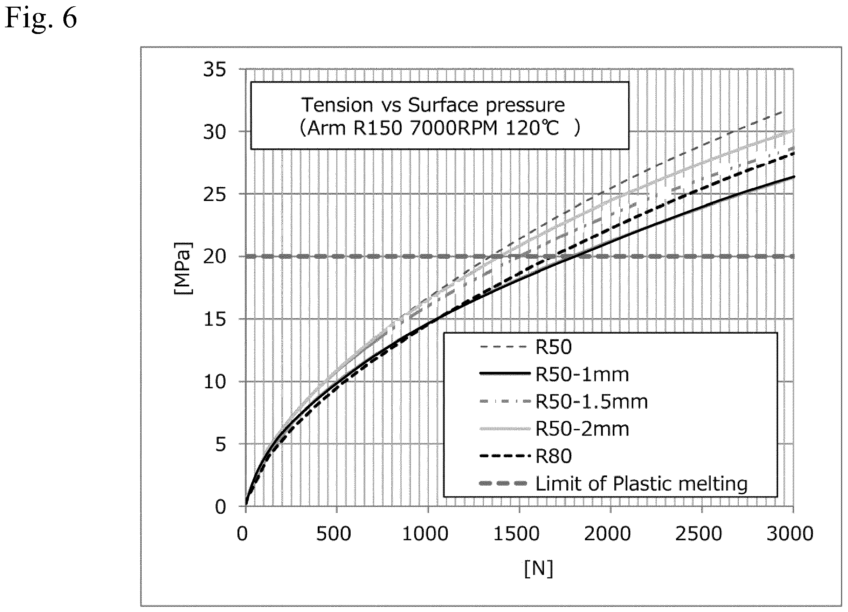

Figure 6 shows a graph of an analysis of tension vs surface pressure of a different radiused back chain links. The analysis was based off of a surface pressure of 20 mPa in which melting of the plastic arm or guide occurs. A chain with inner links with a single radius of 50mm (thin dashed line) reached the surface pressure of 20 mPa at 1340 N. A chain with inner links with a center radius of 50mm which transitions to 2mm radii portions (light solid line) reached the surface pressure of 20 mPa at 1390 N. A chain with inner links with a center radius of 50mm which transitions to 1.5mm radii portions (dash-dot-dot) reached the surface pressure of 20 mPa at 1500 N. A chain with inner links with a center radius of 50mm which transitions to 1.0 mm radii portions (solid line) reached the surface pressure of 20mPa at 1790 N. A chain with inner links with a single radius of 80 mm reached the surface pressure of 20 mPa at 1680 N (bold dashed line).

Actual testing of some of the chains was additionally carried out. Different radiused back links were tested under different tensions (N) against a surface pressure (mPa) exerted on the plastic arm or guide. The plastic arm or guide had a radius of curvature of 150 mm with a 3 mm groove and was made of an injection molded PA46, a high heat resistant polyamide or nylon which retains its mechanical properties at temperatures up to 220° C and has an associated melting point of 290°C.

Referring to Table 1, a chain with inner links with a single radius of 50mm (R50), a chain with inner links with a center radius of 50mm which transitions to 1.0 mm radii portions on either side of the center radius (R50W+1), a chain with inner links with a single radius of 80 mm (R80), and a chain with inner links with a single radius of 100 mm (R100) were tested from low tension to high tension until plastic melting of the plastic arm of guide occurred. N is equal to the number of test samples.

**Table 1**

| Tension (N) | R50 | R50W+1 | R80 | R100 |
|---|---|---|---|---|
| 1200 | | | | |
| 1300 | Pass N=1 | | | |
| 1400 | Pass N=2 | | | |
| 1500 | Frailer N=1 | Pass N=1 | | |
| 1600 | Frailer N=1 | | | |
| 1700 | Frailer N=1 | Pass N=1 | Pass N=1 | |
| 1800 | Frailer N=1 | | | |
| 1900 | | Pass N=1 | Pass N=1 | |
| 2000 | | | Pass N=2 | Pass N=2 |
| 2100 | | Pass N=2 | Frailer N=1 | Frailer N=1 |
| 2200 | | Pass N=2 | | |
| Limit | 1400N | More than 2200N | 2000N | 2000N |

As shown above in Table 1, the plastic melting toughness of the chain with inner links with a center radius of 50mm which transitions to 1.0 mm radii portions on either side of the center radius (R50W+1) improved 1.8 times in comparison with the chain with inner links with a single radius of 50mm (R50) and 1.2 times in comparison to the chain with inner links with a single radius of 80 mm (R80), and the chain with inner links with a single radius of 100 mm (R100).

It was found that 20 mPa was the surface pressure at which melting of the plastic arm or guide occurs. Each chain that was tested was run on a set of 23 tooth sprockets driven by a motor at 7000 rpm, with the chain interacting with the plastic arm or guide. Oil was provided to the chain at a flow rate of 1.0 L/min. The oil was 0W20 at 120°C. A break-in period for each chain was used of 1000N of tension for one hour at 7000 rpm. The plastic melting of the plastic arm and guide was checked 10 minutes after the break-in period. The results of the testing and sample analysis is summarized in Table 2 below.

**Table 2**

| Type of Radius on Back of Link | Analysis Tension at 20 mPa (N) | Actual Testing (N) | Rate |
|---|---|---|---|
| R50 | 1340 | 1400 | 1.04 |
| R50 and 2.0mm | 1390 | 1786 | 1.28 |
| R50 and 1.5mm | 1500 | 1927 | 1.28 |
| R50 and 1.0mm | 1790 | 2200 | 1.28 |
| R80 | 1680 | 1900 | 1.13 |

As shown above, the chain with the highest tension prior to reaching a melting point of the plastic arm or guide was the chain with the multi-radiused back link with a center radius of 50mm which transitions to a large radius of 1.0mm.

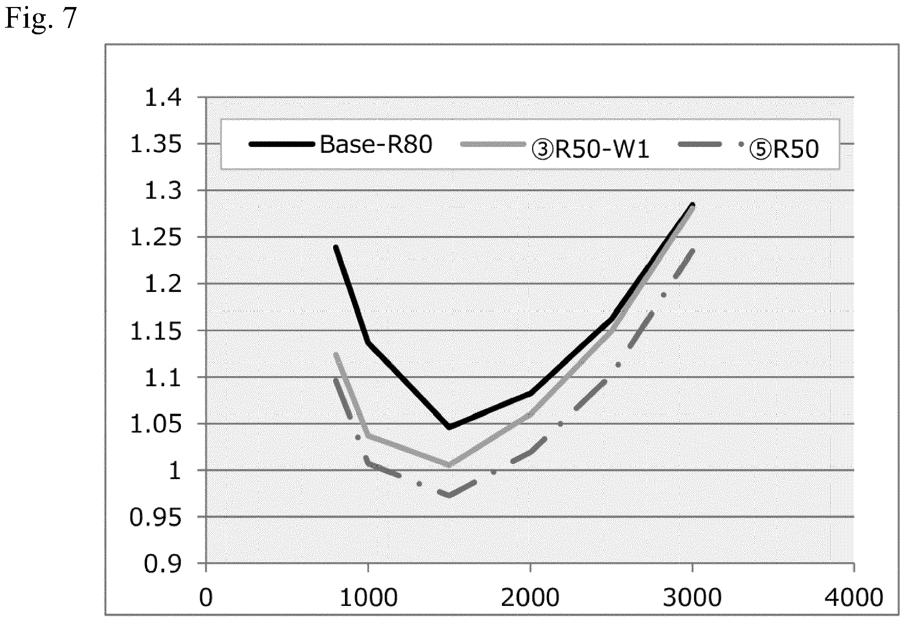

Based on the above results, three chains were friction tested, a chain with links of a single radius of 80mm, a chain with links of a single radius of 50mm and a chain with multi-radiused back links with a center radius of 50mm and transition large radii of 1.0 mm. Friction testing of the chains with the plastic guide or tensioner arm was carried out on a Honda AP1 I3 0.66L engine with a balanced crankshaft. The engine was run at various speeds of 800 rpm, 1000 rpm, 1500 rpm, 2000 rpm, 2500 rpm and 3000 rpm at an oil temperature of 80°C with a measurement of crankshaft loss torque being measured every 30 seconds. The break-in period for each chain was 12 hours. The results of the testing are shown in Figure 7 and Table 3 below.

**Table 3**

| Type | Loss Torque Average over 1000-2500 rpm |
|---|---|
| R80 (dark solid line) | 1.107 Nm |
| R50 and 1.0mm (light solid line) | 1.063 Nm |
| R50 (dash-dot line) | 1.025 Nm |

As shown above, at low speeds, friction loss of the multi-radiused centered back is lower than the single radius R80 inner link chain and at high speeds was nearly equal to the single radius R80 inner link chain.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A chain comprising:
a plurality of interlaced inner links and guide links, coupled together by connecting elements received by the inner links and guide links, wherein at least some of the inner links comprise:
a link body comprising:
a pair of teeth, each tooth having an inner flank and an outer flank, the inner flanks of the teeth connected through a crotch,
a pair of apertures for receiving the connecting elements; and
a multi-radiused back opposite the crotch and the pair of teeth, the multi-radiused back comprising: a center radius opposite the crotch, having a first side and a second side, a first radius adjacent the first side of the center radius and a second radius adjacent the second side of the center radius, wherein the center radius has a radius that is less than the radius of the first radius and the second radius.

2. The chain of claim 1, wherein the first radius and second radius are tangent lines.

3. The chain of claim 1, wherein the first radius and the second radius having a radius of greater or equal to 50mm.

4. The chain of claim 1, wherein the center radius has a radius of less than or equal to 80mm.

5. The chain of claim 1, wherein first radius and the second radius are opposite the pair of teeth.

6. The chain of claim 1, wherein the first radius and the second radius are aligned with the pair of apertures.

7. The chain of claim 1, wherein the chain has three sets of inner links in a guide row aligned with the guide links and two sets of inner links in a non-guide row, misaligned with the guide links.

8. A link having a body comprising:
a pair of teeth, each tooth having an inner flank and an outer flank, the inner flanks of the teeth connected through a crotch;
a pair of apertures for receiving connecting elements; and
a multi-radiused back opposite the crotch and the pair of teeth, the multi-radiused back comprising:
a center radius opposite the crotch, having a first side and a second side,
a first radius adjacent the first side of the center radius, and
a second radius adjacent the second side of the center radius, wherein the center radius has a radius that is less than the radius of the first radius and the second radius.

9. The link of claim 8, wherein the first radius and second radius are tangent lines.

10. The link of claim 8, wherein the first radius and the second radius having a radius of greater or equal to 50mm.

11. The link of claim 8, wherein the center radius has a radius of less than or equal to 80mm.

12. The link of claim 8, wherein first radius and the second radius are opposite the pair of teeth.

13. The link of claim 8, wherein the first radius and the second radius are aligned with the pair of apertures.

14. The link of claim 8, wherein the chain has three sets of inner links in a guide row aligned with the guide links and two sets of inner links in a non-guide row, misaligned with the guide links.
